(19) Europäisches Patentamt
European Patent Office
Office européen des brevets

(11) Publication number: 0 084 885
A1

(12) # EUROPEAN PATENT APPLICATION

(21) Application number: 83100633.3

(51) Int. Cl.³: F 16 D 13/68

(22) Date of filing: 25.01.83

(30) Priority: 27.01.82 US 343330

(43) Date of publication of application: 03.08.83
Bulletin 83/31

(84) Designated Contracting States: BE DE FR GB IT NL SE

(71) Applicant: E.I. DU PONT DE NEMOURS AND COMPANY,
Legal Department 1007 Market Street, Wilmington
Delaware 19898 (US)

(72) Inventor: Kinard, Richard Dale, 2021 Floral Drive,
Wilmington Delaware 19810 (US)

(74) Representative: von Kreisler, Alek, Dipl.-Chem. et al,
Deichmannhaus am Hauptbahnhof, D-5000 Köln 1 (DE)

(54) **Elastomeric-belt spring damper for a clutch mechanism.**

(57) In a clutch in a power train an improved damper means positioned between an input shaft (5) and an output shaft (14) of the clutch (1) comprising a hub member (7) connected to the input shaft and having mounted thereon a plurality of hub pins (8), a rim member (2') connected to the output shaft having mounted thereon a plurality of rim pins (3) in equal number with the hub pins, said hub and rim pins provided with bearing means (4, 4') and radially-positioned oriented elastomeric-belt springs (9) trained over said bearing means of each pair of rim and hub pins so as to operatively join said hub member and said rim member and permit elongation of the elastomeric-belt spring upon relative rotation of the hub member and rim member so as to absorb shock and return the hub and rim members to substantially their original positions upon release of tourque.

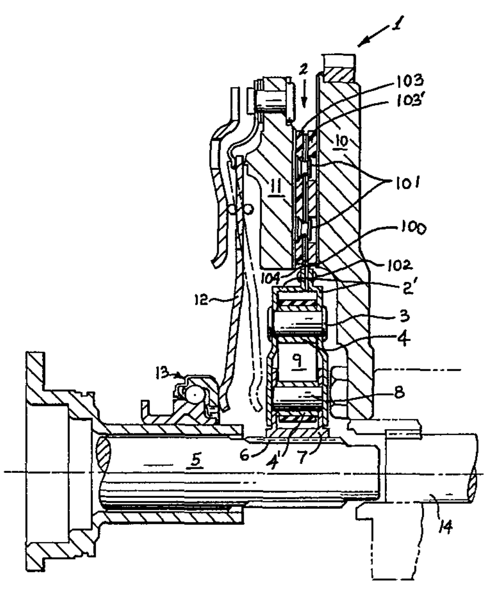


EP 0 084 885 A1

0084885

TITLE

# Elastomeric-Belt Spring Damper for a Clutch Mechanism

## BACKGROUND OF THE INVENTION

This invention is directed to vibration dampers employed in a clutch mechanism as used in power train applications.

Vibration dampers have long been used in torsional couplings especially in automobile clutches. The dampers limit the effects of engine-induced torsional vibration in the drive train. Typically, a manually operated transmission has a clutch hub splined to the input shaft of the transmission and an attached flange associated with two clutch plates. Interconnecting the hub flange and the clutch plates are a number of compression springs located in circumferentially spaced, axially aligned windows in the components. The clutch plates have annular driven discs on the periphery of another disc sandwiched between the peripheries of the clutch plates. These driven-discs of friction material transmit driving power when a pressure plate clamps them against the flywheel of the engine.

There is only limited relative rotation permitted between the hub flange and the clutch plates (9° typical) and that rotation acts through the circumferentially disposed compression springs which are compressed as a function of the relative rotation. Similar dampers may be used in a lock-up clutch of a torque converter for an automatic transmission.

While these compression spring dampers serve to suppress torsional vibrations that cause impact loads, pulsations, noises, and such over a wide range of operating conditions, they tend to be less than

satisfactory under the conditions of idling and low engine load. For example, during idling with a standard manual transmission in neutral gear and with the clutch engaged, the gears of the transmission may rattle in an objectionable manner. The effective deflective spring rate of the compression springs is too high to counteract the power surges under the low load conditions. Attempts to introduce staged spring rates with low rate compression springs in the lower stages involve complexities and costs not warranted by the circumstances.

Line shaft couplings which employ radially disposed elastomeric springs in the form of links or in the form of bands are known. These provide a much "softer" connection than metal springs. Nevertheless, these structures, as employed even in the known multiple radial band type couplings, do not completely eliminate gear rattle in line-shaft couplings.

## SUMMARY OF THE INVENTION

According to this invention, there is provided in a clutch in a power train an improved damper means positioned between an input shaft and an output shaft of the clutch comprising a hub member connected to the input shaft and having mounted thereon a plurality of hub pins, a rim member operatively connected to the output shaft having mounted thereon a plurality of rim pins in equal number with the hub pins, said hub and rim pins provided with bearing means and radially-positioned oriented elastomeric-belt springs trained over said bearing means of each pair of rim and hub pins so as to operatively join said hub member and said rim member and permit elongation of the elastomeric-belt springs upon relative rotation of the hub member and

rim member so as to absorb shock and return the hub and rim members to substantially their original positions upon release of torque. It is preferred that the elastomeric-belt springs are endless and fabricated from an oriented copolyetherester elastomer.

Each elastomeric-belt spring, upon installation, is preferably positioned over pairs of hub and rim pins that are provided with bearing means and installed in a substantially radial direction under substantially zero preload conditions. The preferred elastomeric-belt springs of this invention when so installed transmit substantially no torque between relative mechanism rotational angles of between 0 and about ±5° of the pins of each pair, and the elastomeric-belt springs have capability of transmitting up to full power train torque in a gradually increasing manner in accordance with a predetermined relationship between transmitted torque and clutch mechanism relative rotational displacement.

## BRIEF DESCRIPTION OF DRAWING

FIG. 1 is an elevational view of a 4-spring damper of this invention employed in an automotive clutch drive train and seen from the engine side.

FIG. 2 is an elevational view in cross section on line 2 - 2 of FIG. 1, also showing a conventional clutch-release mechanism not shown in Fig. 1.

FIG. 3 is a graph of a predetermined relationships of torque as a function of relative rotational angle for a clutch of this invention.

## DETAILED DESCRIPTION OF THE INVENTION

Referring to the drawing, in FIGS. 1 and 2, clutch 1 is provided with annular driven clutch disc 2 fastened to rim member 2' by means of projections

100 on cushion spring 104 and circumferentially spaced multiple rivets 101 and 102. Clutch disc 2 is made of two annuli clutch plates 103 and 103' of a friction material spaced by wavy cushion spring 104 and fastened by rivets 101. Rim pins 3 are simply supported between the sides of rim member 2' and they are equally spaced circumferentially around the rim member. Each rim pin 3 carries a bearing 4, such as a needle or sleeve bearing. Usually the damper contains four to six rim pins and hub pins to accommodate four to six springs. Transmission input shaft 5 by means of spline 6 is joined to hub member 7. Transmission output shaft 14 is operatively connected to rim member 2' by being fastened to flywheel 10 which makes contact with clutch disc 2. Hub member 7 carries a number of hub pins 8 equal to the number of rim pins 3, and hub pins 8 are fitted with needle or sleeve bearings 4'. Rim member 2' moves relative to hub member 7. The axis of rotation may be centered as shown or eccentric. Interconnecting the outer faces of bearings 4' and 4 are elastomeric-belt springs 9. These are elastomeric, generally, oval-shaped springs made of an oriented elastomer and the springs are installed with substantially zero preload condition when rim pins 3 and hub pins 8 are aligned radially in pairs.

Preferably, the elastomeric-belt spring 9 is an oriented copolyetherester elastomer and it is an endless spring. The copolyetherester elastomer used to form the spring consists essentially of a multiplicity of recurring long-chain and short-chain ester units joined head-to-tail through ester linkages, said long-chain ester units being represented by the structure:

$$-OGO-\overset{O}{\overset{\|}{C}}R\overset{O}{\overset{\|}{C}}-$$

and said short-chain ester units being represented by the structure:

$$-ODO-\overset{O}{\overset{\|}{C}}R\overset{O}{\overset{\|}{C}}-.$$

wherein:

G is a divalent radical remaining after removal of terminal hydroxyl groups from poly(alkylene oxide) glycols having a molecular weight between about 400-6000, e.g., poly(tetramethylene oxide)glycol;

R is a divalent radical remaining after removal of carboxyl groups from a dicarboxylic acid having a molecular weight less than about 300, e.g., phthalic, terephthalic or isophthalic acids; and

D is a divalent radical remaining after removal of hydroxyl groups from a low molecular weight diol having a molecular weight less than about 250; said short-chain ester units constitute about 15-95% by weight of the copolyetherester and said long-chain ester units constitute the balance.

The copolyetheresters can be made conveniently by a conventional ester interchange reaction. A preferred procedure involves heating the dicarboxylic acid, e.g., dimethyl ester of terephthalic acid, phthalic or isophthalic acid, with a long-chain glycol, e.g., poly(tetramethylene oxide)glycol having a molecular weight of about 600-2000 and a molar excess of diol, e.g., 1,4-butanediol, in the presence of a catalyst at about 150°-260°C and a pressure of 0.5 to 5 atmospheres, preferably ambient pressure, while distilling off methanol formed by the ester

interchange. Thus, preferably, in the above formula G is the group remaining after removal of hydroxyl groups from poly(tetramethylene oxide)glycol having a molecular weight of about 600-2000; R is the group remaining after removal of carboxyl groups from phthalic, terephthalic or isophthalic acids or mixtures thereof, and D is the group remaining after removal of hydroxyl groups from 1,4-butanediol. At least about 1.1 mole of diol should be present for each mole of acid, preferably at least about 1.25 mole of diol for each mole of acid. The long-chain glycol should be present in the amount of about 0.0025 to 0.85 mole per mole of dicarboxylic acid, preferably 0.01 to 0.6 mole per mole of acid.

Preferred copolyesters are those prepared from dimethyl terephthalate, 1,4-butanediol, and poly(tetramethylene oxide)glycol having a molecular weight of about 600-2000 or poly(ethylene oxide)glycol having a molecular weight of about 600-1500. Optionally, up to about 30 mole percent and preferably 5-20 mole percent of the dimethyl terephthalate in these polymers can be replaced by dimethyl phthalate or dimethyl isophthalate. Other preferred copolyesters are those prepared from dimethyl terephthalate, 1,4-butanediol, and poly(propylene oxide)glycol, having a molecular weight of about 600-1600. Up to 30 mole percent and preferably 10-25 mole percent of the dimethyl terephthalate can be replaced with dimethyl isophthalate or butanediol can be replaced with neopentyl glycol until up to about 30% and preferably 10-25% of the short-chain ester units are derived from neopentyl glycol in these poly(propylene oxide)glycol polymers.

The copolyetherester compositions may also contain up to about 5 weight percent of an antioxidant, e.g., between about 0.2 and 5 weight percent, preferably between about 0.5 and 3 weight percent. The most preferred antioxidants are diaryl amines such as 4,4'-bis(α,α-dimethylbenzyl) diphenylamine.

The elastomeric-belt springs of the oriented copolyetherester can be formed in a number of ways. For example, a billet can be molded from the polymer in a conventional manner and the billet oriented by stretching, heat setting, and cooling to form a strap-like strip. The copolyetherester strip is oriented by stretching the copolyetherester by conventional means at least 300% of its original length and preferably at least 400% at a temperature below its melting point by at least 10°C. It is maintained at that length and brought to or maintained at a heat setting temperature between 80° and 10°C below its melting point. It is then cooled to a temperature below the heat setting temperature by at least 55°C. This oriented strip product is then formed into a belt configuration by lap-winding a series of layers and sealing the ends to the adjacent layer or by sealing adjacent layers to each other.

Preferably, the elastomeric-belt spring is composed of two copolyetherester elastomers having different melting points. In the belt spring, the higher melting copolyetherester elastomer is in the form of a plurality of strands, tapes or films which are monoaxially oriented in the direction of their length, and the lower melting copolyetherester elastomer is bonded thereto in an unoriented form as a matrix surrounding the individual strands, tapes or films.

The elastomeric-belt spring can be formed by bringing the lower melting point copolyetherester elastomer and the oriented higher melting point copolyetherester elastomer together at a molding temperature below the melting point of the higher melting point copolyetherester elastomer and above that of the lower melting elastomer. The two elastomers are arranged in such a fashion during the layout of the belt-spring that when the lower melting point copolyetherester elastomer becomes fused in the heating step, it adheres adjacent units of the higher melting point oriented copolyetherester elastomer together.

FIG. 2 is an elevational cross section of a standard automotive manually activated clutch including the damper of this invention. Driven clutch disc 2 is shown interposed between flywheel 10 and pressure plate 11. Pressure plate 11 is held against driven clutch disc 2 heavily biased by diaphragm spring 12 which is movable by clutch release bearing 13 as is well known.

FIG. 3 are graphic plots of torque versus relative rotation between driven clutch disc 2 and transmission input shaft 5. This ordinarily would be traversed on one side of zero-zero when the clutch is engaged and clutch release bearing 13 returns to the position shown in FIG. 2.

In operation, the driven clutch disc 2 is engaged between pressure plate 11 and the face of flywheel 10 as shown in FIG. 2. Driven clutch disc 2 and rim member 2' move relative to hub member 7, and thus, also, input shaft 5. In extreme conditions, the positions shown in dotted lines in Fig. 1 are reached at just beyond 30 degrees of relative rotation depending on space available, and thus

elongating elastomeric-belt springs 9 and providing a typical torque-rotation relationship "I" shown in FIG. 3. The copolyetherester elastomeric-belt spring selected for this damper at somewhat over 30 degrees rotation transmits about 160 foot pounds of torque to the transmission, thereby minimizing jerk by spreading the assumption of full load. Further, a similar relationship is obtained on the other side of the central or zero-zero position so that the damping mechanism can work with either direction of rotation and so that it is effective under conditions where there is a reverse flow of power in the system such as occurs in engine braking or vehicle coasting. By installing the copolyetherester elastomeric-belt springs at substantially zero pre-tension when rim pins 3 and hub pins 8 are aligned radially in the clutch mechanism the positive and negative legs of the torque relative rotation curves are offset around center by a zero response portion of the curve which is a relatively flat portion of the curve. This constitutes selectively plus or minus five degrees of rotation and contributes largely to the elimination of any rattle of the transmission gearing system as the mechanism passes through its central position working in either direction.

Positive stops may be provided to permit emergency operation of the drive system in the event of failure of the elastomeric-belt springs 9. This is accomplished by extending a portion of hub pins 8 into arcuate slots in rim member 2'. The slots are greater in arc than the normal operating range. In the event of failure, the extensions of hub pins 8 bottom on the ends of the slots and transmit torque accordingly.

It is advantageous in some systems to modify the form of torque rotation relationship I of Fig. 3 to provide a stepped relationship initially softer but harder at the extremes of relative rotation. This is accomplished by providing sets of elastomeric-belt springs 9 in the damper paired with alternating sets of elastomeric-belt springs in the damper having different lengths. Initially the shorter set or sets carries the entire torque load. As the relative displacement increases, the longer set, or sets, which are installed slack, pick up load. This produces a relationship with a step as typically shown in II of Fig. 3.

Accordingly, this invention is an improved damping mechanism employing radially disposed oriented elastomeric-belt springs trained around pairs of hub and rim pins having bearing means. The oriented elastomeric springs, preferably made from an oriented copolyetherester elastomer, are disposed over the hub and rim pins with substantially zero preload. The pins lie aligned in pairs on a radius of the hub and rim members such that upon relative rotation of the rim member and hub member, transmitted torque increases from zero transmitted torque to full transmitted torque with an increasing effective spring constant with that increase starting at a relative rotational angle selected from a value above zero and not exceeding about five degrees. This improvement to radial copolyetherester elastomeric damping devices in which the spring rate increases from a nonzero rotational angle point solves the problems of idling gear chatter and provides a damping mechanism effective over the entire loading range and does so in a cost effective manner. It will be recognized that this mechanism

may be combined with other damping mechanisms, such as coulomb friction, to achieve desired results for specific applications.

This damper is a notable advance over prior damping mechanisms which are rapid-response, "hard" mechanisms employing nested compression springs chordally disposed. The instant device is in dynamic balance over its entire range of travel. It is adaptable to manual and automatic automobile clutches. It is amenable to design requirements of specific applications in that the response curve may be controlled readily. The elastomeric spring constant of the oriented copolyetherester elastomer used is not a significant function of elongation. The elastomeric spring has a substantially linear reponse but the effective mechanism elastomeric spring constant, i.e., the slope of the response curve, gradually increases from zero as a function of angle as a result of the combined effects of the spring constant of the material construction of the spring, the geometry of the mechanism and the unstrained shape of the spring.

CLAIMS

1. In a clutch in a power train an improved damper means positioned between an input shaft and an output shaft of the clutch comprising a hub member connected to the input shaft and having mounted thereon a plurality of hub pins, a rim member operatively connected to the output shaft having mounted thereon a plurality of rim pins in equal number with the hub pins, said hub and rim pins provided with bearing means and radially-positioned oriented elastomeric-belt springs trained over said bearing means of each pair of rim and hub pins so as to operatively join said hub member and said rim member and permit elongation of the elastomeric-belt springs upon relative rotation of the hub member and rim member so as to absorb shock and return the hub and rim members to substantially their original positions upon release of torque.

2. The improved damper means of Claim 1 wherein the elastomeric-belt springs are endless and fabricated from an oriented copolyetherester elastomer.

3. The improved damper means of Claims 1 or 2 wherein sets of the elastomeric belt springs in the damper are paired with alternating sets of elastomeric-belt springs in the damper having different lengths.

4. The improved damper means of Claims 1 or 2 wherein the elastomeric-belt springs are positioned over low-rotational friction members in a substantially radial direction with substantially zero preload.

5. The improved damper means of claims 1 or 2 wherein the elastomeric-belt springs transmit no torque between relative mechanism rotational angles of between 0 to about +5°.

Fig. 1

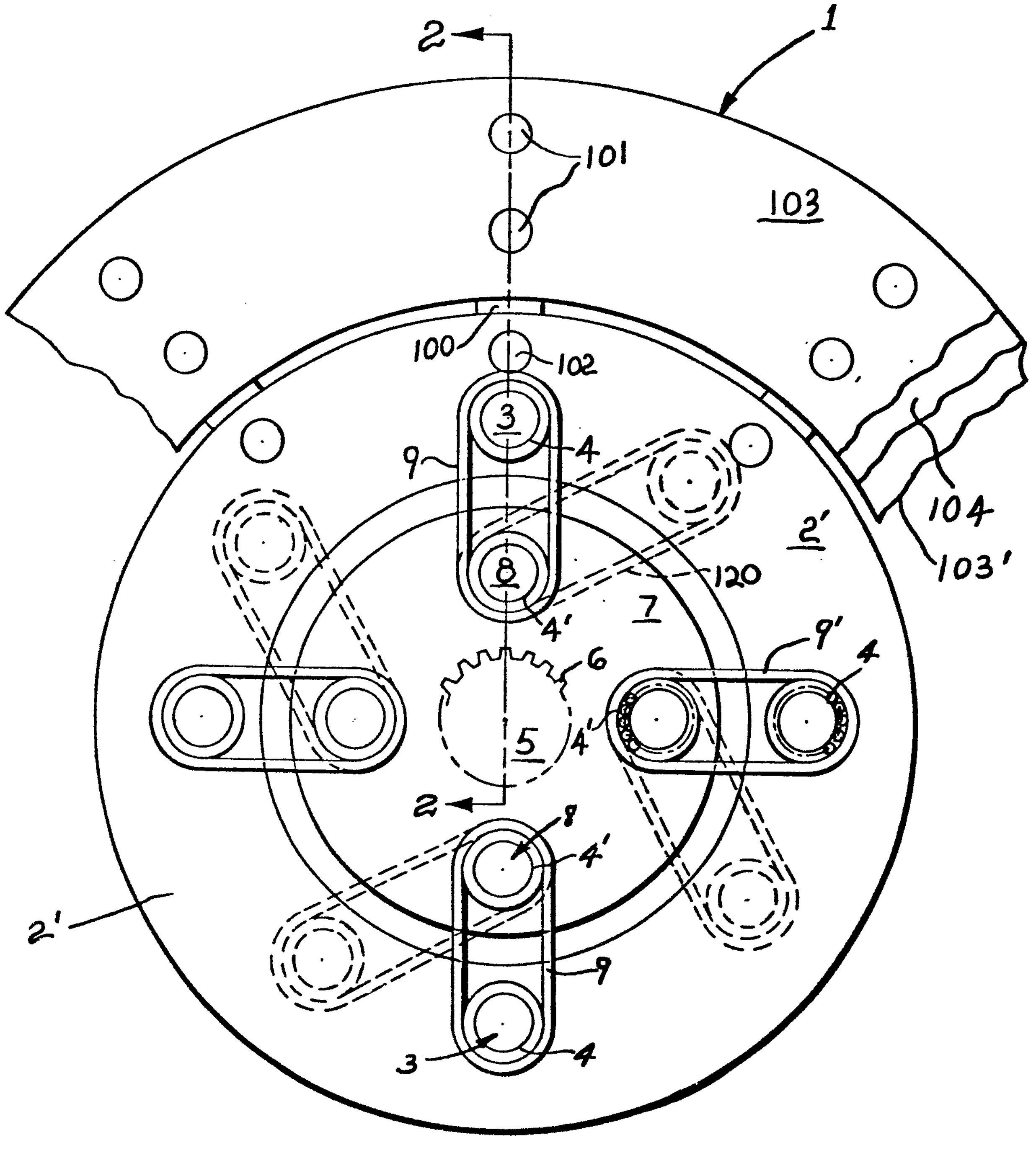

Fig. 2

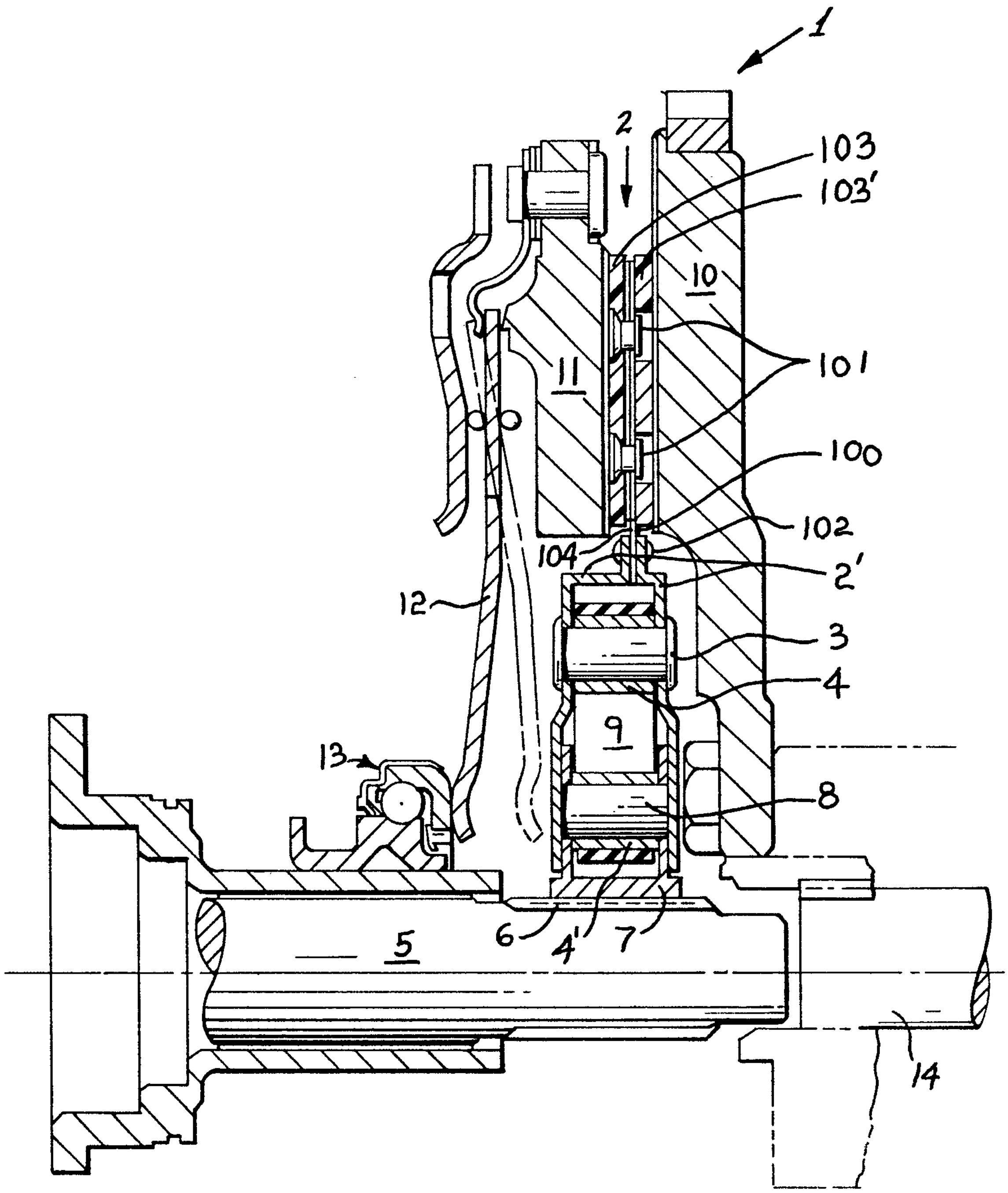

Fig. 3

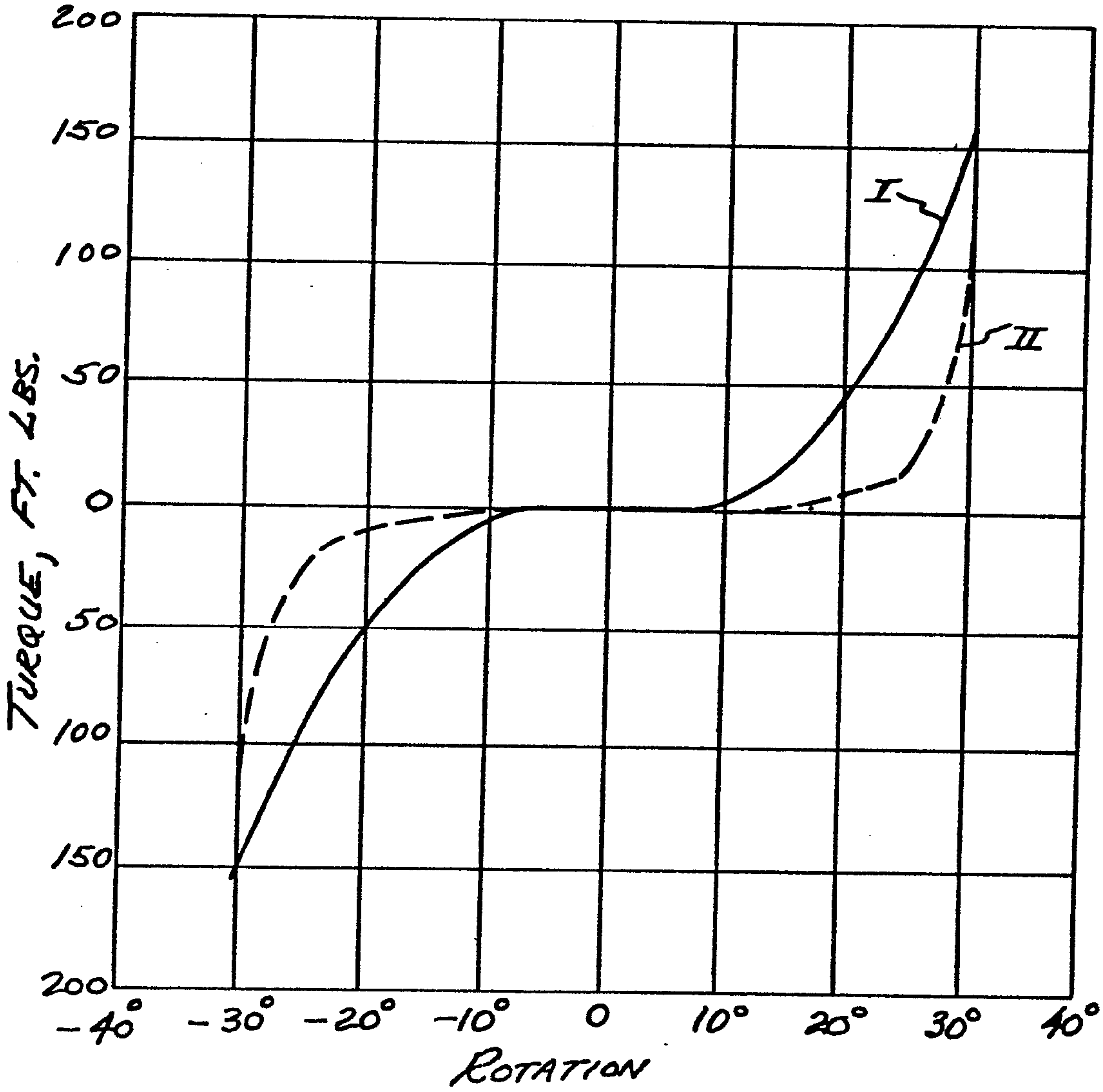
200
150
100
50
0
50
100
150
200
TURQUE, FT. LBS.
I
II
-40°
-30°
-20°
-10°
0
10°
20°
30°
40°
ROTATION

0084885

European Patent Office

# EUROPEAN SEARCH REPORT

Application number

EP 83 10 0633

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-4 300 670 (MATHUES) * Column 1, line 62 - column 2, line 55; figures 1,2 * | 1,2 | F 16 D 13/68 |
| X | US-A-4 252 227 (STAUB) * Column 1, lines 47-55; figures 1,2 * | 1 | |
| Y | FR-A-1 567 626 (DAIMLER-BENZ) * Page 3, lines 2-25; page 4, lines 17-19; page 5, lines 16-17; figures 1,4 * | 1,2,4 | |
| Y | FR-A-1 120 269 (PERUSSEL) * Whole document * | 1,2 | |
| A | FR-A- 904 914 (TOLOTTI) * Page 2, lines 1-16, lines 27-31; figures 1,2,4 * | 2,4 | TECHNICAL FIELDS SEARCHED (Int. Cl. 3) |
| A | DE-A-1 505 731 (DAIMLER-BENZ) | | F 16 D |

The present search report has been drawn up for all claims

| Place of search | Date of completion of the search | Examiner |
|---|---|---|
| THE HAGUE | 28-04-1983 | BARON C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82